# EUROPÄISCHE PATENTSCHRIFT

(11) **EP 3 707 303 B1**
(45) Veröffentlichungstag und Bekanntmachung des Hinweises auf die Patenterteilung: **08.12.2021**
(21) Anmeldenummer: 18796420.0
(22) Anmeldetag: 30.10.2018
(51) Int. Cl.: D06N 3/04

(54) **FASERPRODUKTE MIT EINER BESCHICHTUNG AUS WÄSSRIGEN POLYMERDISPERSIONEN**
FIBRE PRODUCTS WITH A COATING MADE FORMED FROM AQUEOUS POLYMER DISPERSIONS
PRODUITS FIBREUX DOTÉS D'UN REVÊTEMENT CONSTITUÉ DE DISPERSIONS AQUEUSES DE POLYMÈRE

(30) Priorität: 10.11.2017 DE 102017126447
(43) Veröffentlichungstag der Anmeldung: 16.09.2020
(73) Patentinhaber: CHT Germany GmbH, 72072 Tübingen (DE)
(72) Erfinder: KLAUSMANN, Amon-Elias, 72793 Pfullingen (DE); ROLLE, Jan-Valentin, 72760 Reutlingen (DE); HENKEL, Ulrike, 72076 Tübingen (DE); HEES, Michael, 72469 Meßstetten (DE)
(74) Vertreter: dompatent von Kreisler Selting Werner - Partnerschaft von Patent- und Rechtsanwälten mbB
(86) Internationale Anmeldenummer: PCT/EP2018/079737
(87) Internationale Veröffentlichungsnummer: WO 2019/091832

(56) Entgegenhaltungen:
- EP-A1- 0 987 363
- WO-A1-2017/156206
- DE-A1-102005 048 190

## Beschreibung

Die vorliegende Erfindung betrifft Verbundwerkstoffe aus textilen Faserprodukten mit einer Beschichtung umfassend Polymere basierend auf ethylenisch polymerisierbaren Monomeren mit einer Glasübergangstemperatur von mindestens 60° in einer mineralischen Matrix, wobei die Faserprodukte insbesondere erhältlich sind mit einem Beschichtungsverfahren zur Beschichtung von Faserprodukten mit einer wässrigen Polymerdispersion, wobei man zunächst eine wässrige Polymerdispersion basierend auf ethylenisch, insbesondere vinylisch polymerisierbaren Monomeren mit einer Glasübergangstemperatur von mindestens 60°C bereitstellt, diese mit einem Faserprodukt in Kontakt bringt und anschließend trocknet. Die Erfindung betrifft weiterhin die Verwendung entsprechend beschichteter Faserprodukte zur Bewehrung von mineralischen Matrices.

Stahlbeton ist aus der heutigen Bauindustrie nicht mehr wegzudenken. Dieser bietet eine hohe Robustheit zu einem akzeptablen Preis. Ein Nachteil dieses Baustoffes ist die Neigung zur Korrosion der Stahlbewehrung. In den 1990er Jahren etablierte sich neben Stahlbeton noch der Faserbeton als Alternative. Dem Beton werden hierbei meist Stahl- oder Kunststofffasern beigemischt. Diese liegen ungerichtet in der Matrix vor. Der Ansatz, gerichtete Fasern in Form von Armierungsstrukturen zu verwenden, ist relativ neu: Seit knapp 20 Jahren wird Grundlagenforschung an diesem Verbundwerkstoff Textilbeton betrieben.

Im Textilbeton kommen Endlosfasern (Filamente) aus beispielsweise Glas, Basalt und Kohlenstoff zum Einsatz in Form von zwei- oder dreidimensionalen textilen Flächen- oder Raumgebilden. Grundsätzlich eignen sich hierfür Fasern mit hoher Festigkeit und hoher Steifigkeit beziehungsweise vergleichbarem Elastizitätsmodul wie Stahl, wie beispielsweise alkaliresistente Glasfasern oder Kohlefasern. Durch die Geometrie der Gelege lassen sich die technischen Textilien auf die Beanspruchung maßschneidern. Die variablen Abstände zwischen den Garnen in den Gelegen bedingen eine spezielle Kornzusammensetzung des Betons. Diese haben gegenüber den herkömmlichen Zementen einen geringeren Größtkorndurchmesser. Daher kommen in Kombination mit textilen Bewehrungen Feinbetone zum Einsatz. Die Abstände zwischen den Kohlefasersträngen im Gelege sind für die Bauteilbemessung essentiell. Durch die reduzierte Korngröße wird die Durchdringung der Gelege verbessert und tragfähige Verbunde zwischen mehreren Textilbetonschichten können realisiert werden.

Der Einsatz von textilen Bewehrungen ermöglicht es, einige interessante Verbesserungen in Bezug auf Verarbeitung sowie Eigenschaften von Verbunden zu erzielen. Der größte Vorteil ist der Wegfall der im Stahlbeton üblichen zusätzlichen Betondeckung als Korrosionsschutz. Bei Textilbeton richtet sich die Schichtdicke des Betons neben den Betoneigenschaften nur nach der Geometrie und Festigkeit der verwendeten Garn- bzw. Faserverbundmaterialien, um die Mindestanforderungen der Belastbarkeit an den Verbund sicherzustellen. Hierdurch kann die Gesamtdicke eines Bauteils auf etwa ein Viertel der typischen Dicke eines Stahlbetonbauteils reduziert werden, und es wird von Materialeinsparungen von bis zu 80% berichtet. Dies ermöglicht eine leichtere Bauweise sowie die Realisierung von bisher für nichtvorgespannte Armierungssysteme unmöglichen Formen und Anwendungen, da die Bauteile bei gleicher Tragfähigkeit dünner konstruiert werden können.

Textile Bewehrungsstrukturen haben eine höhere Wirksamkeit in der Verbesserung von Verbundeigenschaften, wenn sie als geometrische Strukturen eingebracht werden. Sie haben als Bewehrungselement in Betonbauteilen oder als Verstärkungsstrukturen im Bereich Instandhaltung von Bauwerken kommerzielle Verwendung gefunden. Da die Anforderungen an textile Bewehrungsstrukturen vielfältig sind, finden auch eine Vielzahl verschiedener Fasertypen Verwendung. Das Spektrum umfasst anorganische Fasern wie Kohle-, Glas- und Basaltfasern bis hin zu organischen Fasern aus Aramid, Polyethylen oder Polypropylen.
Textilbewehrte Betonstrukturen finden schon heute zahlreiche interessante Anwendungen, beispielsweise für die nachträgliche Verstärkung und Instandhaltung von Bauwerken oder als Fassadenelemente.

WO 2004/007161 A1 beschreibt die Anwendung textilbewehrter Betonstrukturen zur Verstärkung von Beton-Abwasserrohren. Die Verstärkung von Fahrbahndecken aus Asphalt und Beton ist aus US 6,632,309 B1 bekannt. Die Herstellung von Betonfertigteilen ist in EP 2 894 272 A2 und auch in WO 2014/106685 A1 offenbart.

Zur Herstellung der textilen Bewehrungsstrukturen werden die geschlichteten Filamentfasern in der Regel zunächst zu einem Garn beziehungsweise zu Rovings (Bündel, Multifilamentegarn, angelehnt an DIN 60 001, Teil 2) aus mehreren tausend Filamenten verarbeitet und gebündelt. Anschließend werden diese über textile Prozesse zu einem Verstärkungstextil mit definierter Geometrie verarbeitet. Im Anschluss der Verarbeitung werden diese Textilien mit einem polymeren Material getränkt. Diese Tränkung/Beschichtung umschließt möglichst alle Einzelfilamente und ermöglicht so den inneren Verbund der Fasern beziehungsweise des Rovings, sowie die Anbindung der Randfasern zum Beton, den sogenannten äußeren Verbund. Weiterhin bewirkt die Beschichtung eine Formstabilisierung der Gelege und stellt die Geometrietreue der Armierung sicher. Dieser Prozessschritt kann zum einen in Form eines diskontinuierlichen textilen Prozesses durch Tränkung und Härtung mit einem Reaktivharz durchgeführt werden. Bei diesen Prozessen werden beispielsweise Epoxid-Harze oder ungesättigte Polyesterharze verwendet. Zum anderen können Verbundtextilien in einem kontinuierlichen textilen Beschichtungsprozess, zum Beispiel durch Foulardieren, mit einem Beschichtungsmittel getränkt werden.

Bisher werden zum Beispiel carboxylierte Styrol-Butadien-Copolymere (sogenannte X-SBR) in solchen Prozessen eingesetzt. Nach der Tränkung durchlaufen die beschichteten Flächengebilde einen Trocknungs- sowie einen Härtungsschritt. Die so hergestellten Verbundtextilien können je nach Eigenschaften der Textilgeometrie und der verwendeten Beschichtung als drapierbare Rollenware für Anwendungen im Bereich Instandhaltung oder als Mattenware im Neubau beziehungsweise für Fertigbauteile verwendet werden. Durch geeignetes Einbringen dieser textilen Flächengebilde in ein Matrixmaterial erhält man den entsprechenden Verbundwerkstoff. Werden als Matrixmaterialien Beton beziehungsweise zementartige und/oder mineralische Matrixmaterialien verwendet, spricht man von Textilbetonbauteilen oder -strukturen.

Die als Bewehrung im Beton verwendeten Textilien haben die Aufgabe, die von außen einwirkenden Lasten insbesondere in Form von Zugkräften über die Grenzfläche zum Beton aufzunehmen. Innerhalb der Verbundstruktur, das heißt insbesondere innerhalb jedes einzelnen Rovings müssen diese Zugkräfte auf die Einzelfilamente übertragen werden. Die vollständige Ausnutzung der Fasereigenschaften ist nur durch Tränkung der Rovings mit einem geeigneten Material möglich und ermöglicht es, erheblich höhere Zugfestigkeiten (>40%) zu erreichen als im ungetränkten Roving. Das Beschichtungsmittel hat innerhalb dieses Verbundwerkstoffes die Funktion, einen optimalen Verbundschluss von der Betonmatrix in das Verbundtextil hinein zu gewährleisten. Dem polymeren Beschichtungsmaterial kommt somit eine zentrale Bedeutung im Hinblick auf die Eigenschaften des Gesamtbauteils zu: Es ermöglicht die optimale Krafteinleitung sowohl an der Grenzfläche Beton-Verbundtextil wie auch zwischen den jeweiligen Einzelfilamenten eines Rovings innerhalb des Verbundtextils.

Bestimmend für die Leistungsfähigkeit eines Verbundwerkstoffes wie Textilbeton ist die Kraftübertragung an den genannten Grenzflächen. Insbesondere bedeutet dies, dass diese Eigenschaften unter den geforderten Umwelteinflüssen und über die gesamte Lebensdauer des Bauteils gewährleistet werden müssen. So sind Textilbetonbauteile beispielsweise Temperaturanforderungen im Außenbereich von - 30°C bis +100°C ausgesetzt, müssen der alkalischen Porenlösung des Betons widerstehen oder je nach Anwendung auch gegen Salzbelastung resistent sein. Daraus ergeben sich hohe Anforderungen an die zu wählenden Beschichtungsmaterialien.

Für den Verstärkungsbereich liegt eine allgemeine bauaufsichtliche Zulassung des Deutschen Instituts für Bautechnik in der Bundesrepublik Deutschland (abZ) des Handelsprodukts TUDALIT^{®} (Z-31.10-182) vor. In dieser ist ein wässriges Beschichtungsmaterial auf Basis einer Dispersion eines carboxylierten Styrol-Butadien-Copolymer (sog. X-SBR) beschrieben, welches mit Melamin-FormaldehydHarzen vernetzt wird. Die so erhaltenen Systeme zeigen eine ausreichende Beständigkeit gegenüber dem alkalischen Medium der Betonporenlösung und weisen ein mittleres Niveau an Garnzugfestigkeit im Bereich 1700 N/mm² auf. Weiterhin kann das Bindersystem über einen kontinuierlichen Tauch- und/oder Gießprozess appliziert werden und die hergestellten Gitter lassen sich aufgrund ihres Eigenschaftsprofil auf Rollenware aufwickeln und in bestimmten Grenzen auf der Baustelle den geforderten Geometrien durch Biegen/Umformen anpassen. Allerdings ist zu erwähnen, dass durch die Verwendung des reaktiven Melamin-Formaldehyd-Vernetzers ein sehr enges Zeitfenster für die Verarbeitung vorliegt (Topfzeit), was die praktische Verwendbarkeit dieses Systems erheblich einschränkt. Weiterhin nachteilig ist, dass die mit diesem System erzielten Verbundfestigkeiten hohe Verankerungslängen erfordern. Außerdem erweisen sich die gemessenen Verbundeigenschaften im Textilbetonbauteil als sehr stark temperaturabhängig: Aufgrund der niedrigen Glasübergangstemperatur des X-SBR ist ein Einsatz in Außenanwendungen nicht möglich und die Zulassung wurde dementsprechend nur im Innenbereich und für Temperaturen bis 40 °C erteilt. Ein ähnliches System wird auch in DE 10 2005 048 190 A1 verwendet.

Die Verwendung von wässrigen Polymer-Dispersionen als Beschichtung für textile Bewehrungen in Beton wird außerdem in EP 2004712 B1 beschrieben. Hier wird eine wässrige Polychloropren-Dispersion in Kombination mit anorganischen Partikeln für faserverstärkten Beton eingesetzt. Hier wurde die Herstellung eines steifen Textils durch die Kristallinität der Polychloroprenbeschichtung nach der Filmbildung beziehungsweise Abtrocknung erzielt. Eine wirklich relevante Aufwertung der mechanischen Eigenschaften im Verbund wird allerdings erst durch den Zusatz von anorganischen Partikeln in der gleichen Beschichtung erzielt. Weiterhin wurden schon 2001 AR-Glasfasern mit Polyacrylat-Dispersionen beschichtet um diese für den Einsatz in textilverstärkten Betonbauteilen zu prüfen (Dissertation M. Schleser "Einsatz polymerimprägnierter, alkaliresistenter Glastextilien zur Bewehrung zementgebundener Matrices", Aachener Berichte Fügetechnik, Band 06/2008, Hrsg. Prof. Dr. Ing. U. Reisgen, 1. November 2008 Shaker Verlag). Allerdings wurden ausschließlich Polymere mit einer Glasübergangstemperatur von deutlich unter 60°C eingesetzt, sowie die Bauteil-Eigenschaften bei höheren Anwendungstemperaturen nicht untersucht.

Für den Einsatz in einem höheren Temperaturbereich kommen aushärtbare Reaktivharz-Systeme, insbesondere Epoxidharze, als polymere Matrixmaterialien in Armierungstextilien zur Anwendung. Solche Systeme sind zum Beispiel in DE 102008040919 A1 sowie EP 2 530 217 B1 beschrieben. Die dort erwähnten Verbundwerkstoffe bestehen aus Armierungstextilien aus technischen Fasern wie Glas, Carbon, Basalt oder Aramid in zementgebundenen Systemen. Durch die Verwendung von Epoxidharzen werden Armierungsstrukturen hoher Steifigkeit und Festigkeit erhalten. Die erreichbaren Zugfestigkeiten im Fall von Kohlefaser liegen im Bereich von 3500 N/mm². Die Verbundfestigkeit, Verankerungslänge und Beständigkeit gegenüber der alkalischen mineralischen Matrix in zementgebundenen Systemen werden als gut beschrieben. Diese Systeme gewährleisten die Beibehaltung der Verbundeigenschaften für Temperaturen bis 100°C, weshalb hier Anwendungen im Außenbereich in Frage kommen. Die mit Reaktivharz, insbesondere Epoxidharz, beschichteten Armierungstextilien lassen sich allerdings nur diskontinuierlich herstellen und sind aufgrund ihrer Steifigkeit nicht mehr auf Rollen wickelbar oder um vorhandene Geometrien drapierbar.

Darüber hinaus besitzen diese Reaktivharze, insbesondere Epoxidharze, kurze Verarbeitungszeiten von in der Regel unter 90 Minuten. Die Verbundeigenschaften im Betonbauteil sowie die Temperaturabhängigkeit der Verbundeigenschaften sind gut untersucht und im Rahmen der Sonderforschungsbereiche 528 und 532 der Deutschen Forschungsgemeinschaft (DFG) publiziert. (beispielsweise Manfred Curbach, Regine Ortlepp (Hrsg.) SFB 528 Textile Bewehrungen zur Bautechnischen Verstärkung und Instandsetzung, Abschlussbericht -gekürzte Fassung- für die Periode 2008/2 - 2011/1). Insgesamt ist die Verwendung von Reaktivharzsystemen zur Tränkung von textilen Bewehrungen für Betonstrukturen Stand der Technik. Dies wird auch beschrieben in EP 2 666 922 B1, in dem kunststoffbewehrte Rovings, beispielsweise bei 80°C getrocknete mit Epoxidharz getränkte Glas-Langfasern (sogenannte Prepregs), als Bewehrungsstrukturen verwendet werden. Leichte Betonverstärkungseinheiten aus Harz-getränkten Fasermaterialien werden ebenfalls in EP 0 227 207 B1 beschrieben; hier werden neben Epoxidharzsystemen zusätzlich praktisch alle marktüblichen Reaktivharzsysteme verwendet. In US 4 910 076 A werden zwei verschiedene Ansätze kombiniert und ein mit Reaktivharz (Polyurethan oder Epoxid) getränktes Fasernetzwerk nachträglich mit einer selbstvernetzenden SBR-Dispersion beschichtet.

Bei der Verwendung von aushärtbaren Reaktivharzen, beispielsweise Epoxidharzen, als polymere Beschichtungsmaterialien werden Gitter erhalten, die sich durch ein hohes Garnzugfestigkeitsniveau auf Kohlefaser bis zu 3500 N/mm² und hohe Alkalistabilität auszeichnen. Zudem sind die Verbundeigenschaften in Textil-Beton-Verbund temperaturstabil bis 100°C. Nachteilig ist jedoch, dass eine kontinuierliche Applikation des Tränkungsmaterials aufgrund der limitierten Verarbeitungszeiten unmöglich ist. Weiterhin können lediglich steife, nicht drapierfähige Gitter erhalten werden, weshalb mit diesen Systeme die Herstellung von wickelbaren Verstärkungstextilien, aus denen einfach zu transportierende Rollenware hergestellt werden kann, nicht möglich ist. Kritisch zu werten ist weiterhin die gesundheitliche Gefährdung durch die Verarbeitung von Epoxidharzen und Aminen im Großmaßstab.

Das alternative Beschichtungsmittel auf Basis von carboxylierten Styrol-Butadien-Copolymeren erlaubt zwar die Herstellung wickel- und drapierbarer Armierungstextilien, welche zudem prinzipiell in einem kontinuierlichen Prozess hergestellt werden können. Die erhaltenen Armierungstextilien zeigen jedoch nur geringe Garnzugfestigkeiten auf Kohlefaser von 1700 N/mm². Zur Erzielung von ausreichenden Verbundeigenschaften im Textil-Beton-Verbund werden weiter große Verankerungslängen benötigt, was grundsätzlich von Nachteil ist in Bezug auf eine Bauteilbemessung und Bauteilgestaltung. Zudem können mit diesem Beschichtungssystem lediglich Verbundeigenschaften bis 40°C gewährleistet werden - was für die kommerzielle Anwendung insbesondere im Außerbereich eine wesentliche Einschränkung darstellt.

Beschichtungssysteme auf Basis von Polychloropren-Dispersionen ergeben nach dem Stand der Technik nur in Kombination mit anorganischen Partikeln ausreichend gute Verbundeigenschaften. Die Eigenschaften im Bezug zu Temperaturbeständigkeit und Alkalibeständigkeit werden nicht durch Beispiele belegt.

EP 0 987 363 A1 offenbart ein vernetzbares Copolymerpulver auf der Basis von ethylenisch ungesättigten Monomeren mit einer Glasübergangstemperatur (Tg) oder einem Schmelzpunkt (Tm) von mindestens 40 ° C und einer Schmelzviskosität von mindestens 2000 mPa · s, welches zur Verstärkung von Textilgeweben für die Herstellung beschussfester Fasermaterialien verwendet wird. Die verfestigen Fasergebilde können mit Stahlplatten oder Keramikplatten laminiert werden.

WO 2017/156206 A1 beschreibt eine Zusammensetzung und ein Verfahren zur Herstellung von Verbundfasern zur Bewehrung von Beton. Die Verbundfasern umfassen mehrere mit Siliciumdioxid beschichtete Glasfasern. Die Siliciumdioxidpartikel bieten eine verbesserte Grenzfläche zwischen den Verbundfasern und der Betonmatrix.

DE102005048190-A1 offenbart ein Faserprodukt zur Verstärkung von mineralischen Werkstoffen, wobei das Faserprodukt ein textiles Faserprodukt mit einer Beschichtung umfasst. Die Beschichtung enthält Polymere wie Acrylpolymeren oder Styrol-Butadien Copolymere. Die bevorzugte Glasübergangstemperatur ist im Bereich von 0-35°C.

Die Aufgabenstellung der vorliegenden Erfindung besteht gegenüber dem beschriebenen Stand der Technik daher darin, einen Verbundwerkstoff aus einer mineralischen Matrix mit textiler Bewehrung bereitzustellen, mithilfe eines polymeren Beschichtungsmittels, das in einem kontinuierlichen, wasserbasierten Prozess auf ein Faserprodukt aufgebracht werden kann und eine optimale Krafteinleitung von einer mineralischen Matrix in eine textile Bewehrung ermöglicht. Die entsprechenden beschichteten textilen Armierungsstrukturen sollen zur Anwendung in zementartigen Matrices geeignet sein und auf Rollen (Kaulendurchmesser ab 20 cm) gewickelt werden können. Insbesondere die Zugfestigkeiten von mit einem erfindungsgemäßen Beschichtungsmittel getränkten 48K Kohlefaserrovings sollen im Temperaturbereich zwischen -30 und +100°C in einem Bereich größer 3000 MPa liegen. Weiter sollen die Verbundeigenschaften der beschichteten Armierungsstruktur in einem Textilbeton-Verbund von -30°C bis +100°C erhalten bleiben sowie eine ausreichende Beständigkeit gegenüber der alkalischen Umgebung in zementartigen beziehungsweise mineralisch gebundenen Matrices gegeben sein.

In einer ersten Ausführungsform wird die erfindungsgemäße Aufgabenstellung gelöst durch einen Verbundwerkstoff aus einem textilen Faserprodukt mit einer Beschichtung umfassend zwischen 5 Gew.-% und 100 Gew.-% eines aufgebrachten Materials, bezogen auf die Rohmasse des Faserprodukts, wobei das Material
20 bis 100 Gew.-% Polymere basierend auf ethylenisch polymerisierbaren Monomeren mit einer Glasübergangstemperatur von mindestens 60°C,
0 bis 80 Gew.-% Vernetzerbausteine sowie
0 bis 20 Gew.-% sonstige Additive
umfasst,
in einer mineralischen Matrix.

Vorzugsweise handelt es sich bei der mineralischen Matrix um eine Betonmatrix. Bei dem erfindungsgemäßen Verbundwerkstoff handelt es sich insbesondere um einen Textil-Beton-Verbund mit den beschriebenen Vorteilen der Erfindung

Vorzugsweise umfasst die Beschichtung 10 bis 60 Gew. % des aufgebrachten Materials.

Vorzugsweise sind die polymerisierbaren Monomere vinylisch polymerisierbar.

In einer bevorzugten Ausführungsform sind die Polymere aus einer Monomerzusammensetzung erhältlich, wobei die Monomerzusammensetzung 5% bis 100% Basismonomere A, 0% bis 50% funktionelle Monomere B und 0% bis 30% Vernetzer-Monomere C, jeweils bezogen auf die Gesamtmasse der Monomerzusammensetzung, enthält, wobei insbesondere die Basismonomere A ausgewählt sind aus der Gruppe der vinylaromatischen Monomere und der C₁- bis C₂₄-Alkyl(meth)acrylate, insbesonderedie funktionellen Monomere B ausgewählt sind aus der Gruppe der (Meth)acrylsäure, C₂- bis C₈-Hydroxyalkyl(meth)acrylate, C₂- bis C₈-(Alkyl)-aminoalkyl(meth)acrylate, sulfonierten Monomere, phosphatierte Monomere und Vinylpyridine und insbesondere die Vernetzer-Monomere C mindestens zwei ethylenisch ungesättigte nicht konjugierte Gruppen, N-Methylolgruppen und/oder Epoxygruppen umfassen und.

Bevorzugt umfassen die Vernetzerbausteine Monomere C und/oder externe Vernetzer mit einer Reaktivität gegenüber den funktionellen Monomeren B und sind insbesondere ausgewählt aus der Gruppe der di-, tri- und/oder polyfunktionellen ungeblockten oder geblockten Isocyanaten, Epoxysilanen, Formaldehydharzen, Melaminharzen, Carbodiimiden und Epoxidharzen. Diese Bausteine reagieren unter Vernetzung mit den anderen Bestandteilen der Beschichtung.

Das textile Faserprodukt in dem erfindungsgemäßen Verbundwerkstoff umfasst vorzugsweise linienförmige textile Gebilde, zweidimensionale textile Flächengebilde und/oder dreidimensionale textile Raumgebilde.

Vorzugsweise umfasst das textile Faserprodukt in dem erfindungsgemäßen Verbundwerkstoff Carbonfasern, Glasfasern, Basaltfasern, Aramidfasern, Polyethylenfasern und/oder Polypropylenfasern einschließlich deren Gemische oder besteht aus den genannten Fasern.

Das textile Faserprodukt in dem Verbundwerkstoff ist vorzugsweise erhältlich mit einem Verfahren zur Beschichtung von Faserprodukten mit einer wässrigen Polymerdispersion, insbesondere zur Herstellung der erfindungsgemäßen Faserprodukte, wobei man
i) eine wässrige Polymerdispersion bereitstellt, die ein Polymer basierend auf ethylenisch, insbesondere vinylisch polymerisierbaren Monomeren mit einer Glasübergangstemperatur von mindestens 60°C sowie gegebenenfalls ein geeignetes Material zur Vernetzung des Polymers enthält,
ii) ein Faserprodukt mit der wässrigen Polymerdispersion in Kontakt bringt und
iii) das so beschichtete Faserprodukt trocknet, insbesondere bei Raumtemperatur oder einer erhöhten Temperatur von bis zu 220°C.

Im Stand der Technik wurden zur Beschichtung von Faserprodukten mit wässrigen Polymerdispersionen bisher fast ausschließlich SBR- und Polychloropren-Typen eingesetzt mit dem Argument, dass diese in alkalischer Umgebung hoch beständig sind. Im Rahmen der vorliegenden Erfindung wurde nun überraschenderweise gefunden, dass auch bestimmte Dispersionen von Polymeren beispielsweise auf Basis (meth-)acrylischer Monomere und/oder styrenischer Monomere eine ausreichend hohe Alkalibeständigkeit aufweisen. Überraschenderweise sind wässrige Dispersionen von Polymeren mit einer Glasübergangstemperatur von mindestens 60°C auf Basis vinylisch polymerisierbarer Monomere, gegebenenfalls in Kombination mit externen Vernetzern, gut geeignet zur Beschichtung von Faserprodukten zur Verwendung in Textil-Beton-Verbundsystemen, welche die oben genannten Eigenschaften aufweisen.

Bevorzugt liegt die Glasübergangstemperatur der Polymere in der eingesetzten Dispersion bei mindestens 70°C.

In einer bevorzugten Ausführungsform des Verfahrens werden als Faserprodukt linienförmige textile Gebilde, zweidimensionale textile Flächengebilde und/oder dreidimensionale textile Raumgebilde eingesetzt.

Geeignete linienförmige textile Gebilde umfassen beispielsweise Garne, Rovings, Zwirne und/oder Seile ohne darauf beschränkt zu sein. Geeignete praktisch zweidimensionale textile Flächengebilde umfassen beispielsweise Gelege, Gewebe, Gewirke, Gestricke, Geflechte, Nähgewirke, Vliesstoffe und/oder Filze ohne auf diese beschränkt zu sein.

In einer bevorzugten Ausführungsform des Verfahrens umfasst das Faserprodukt Carbonfasern, Glasfasern, Basaltfasern, Aramidfasern, Polyethylenfasern und/oder Polypropylenfasern. Insbesondere besteht das Faserprodukt aus Fasern einer dieser Faserarten oder deren Mischungen.

Das Inkontaktbringen der wässrigen Polymerdispersion und des Faserprodukts kann auf jede aus dem Stand der Technik bekannte Art erfolgen. Bevorzugt bringt man das Faserprodukt mit der wässrigen Polymerdispersion in Kontakt, indem man ein kontinuierliches oder diskontinuierliches textiles Applikationsverfahren aus dem Stand der Technik anwendet. Besonders bevorzugte Applikationsverfahren sind Tränken, Sprühen, Tauchen, Gießen und/oder Spritzen, wobei die Erfindung nicht auf diese Verfahren beschränkt ist. Die so erzielte aufgetragene Masse Material in Bezug auf die Rohmasse des Faserprodukts beträgt zwischen 5 Gew.-% und 100 Gew.-%, bevorzugt zwischen 10 Gew. % und 60 Gew. %, besonders bevorzugt zwischen 25 Gew. % und 50 Gew. %, ganz besonders bevorzugt zwischen 30 Gew. % und 40 Gew. %.

In einer bevorzugten Ausführungsform des Verfahrens werden die Anteile der Komponenten der wässrigen Polymerdispersion so gewählt, dass der Feststoffgehalt zwischen 10 Gew. % und 70 Gew. %, besonders bevorzugt zwischen 25 Gew. % und 60 Gew. % und ganz besonders bevorzugt zwischen 40 Gew. % und 50 Gew. % beträgt, bezogen auf die Gesamtmasse der Polymerdispersion. Der Feststoffanteil der Dispersion enthält vorzugsweise 20 bis 100 Gew. % Polymer, 0 bis 80 Gew. % Vernetzer sowie 0 bis 20 Gew. % sonstige Additive, bezogen auf den Feststoffanteil der Dispersion, wobei sich die Prozentangaben zu 100% addieren.

Neben den beschriebenen Hauptkomponenten kann die wässrige Dispersion gegebenenfalls weitere aus der Bau-, Textil-und Lackindustrie bekannte Hilfsmittel und Additive enthalten, wie zum Beispiel, aber nicht ausschließlich, Verlaufshilfsmittel, Netzmittel, Entschäumer, Entlüfter, organische beziehungsweise anorganische Verdickungsmittel, klebrigmachende Harze, Füllstoffe, pH-Wert einstellende Mittel und/oder Konservierungsmittel.

Die wässrige Polymerdispersion basierend auf vinylisch polymerisierbaren Monomeren wird in einer bevorzugten Ausführungsform des Verfahrens mittels aus dem Stand der Technik bekannter geeigneter kontinuierlicher, semikontinuierlicher oder diskontinuierlicher Polymerisationsverfahren bereitgestellt. Besonders bevorzugt sind die Emulsionspolymerisation, Suspensionspolymerisation oder Dispersionspolymerisation. Ganz besonders bevorzugt wird die Polymerdispersion durch Emulsionspolymerisation erhalten, welche technisch etabliert und vielfach beschrieben ist (Hans-Georg Elias, Makromoleküle Band 3 "Industrielle Polymere und Synthesen", 6. Auflage, Wiley-VCH). Die Polymerdispersion kann mit den mit im Stand der Technik üblichen oberflächenaktiven Agenzien stabilisiert werden, wie beispielsweise anionischen Tensiden, nichtionischen Tensiden und/oder Schutzkolloiden sowie deren Mischungen, ohne dass die Erfindung auf diese beschränkt wäre. Für die Initiation der Polymerisationsreaktion kann jede geeignete Art von Initiatoren genutzt werden, wie zum Beispiel, aber nicht ausschließlich, Peroxide, Azoverbindungen und/oder Redoxinitiator-Systeme. Es können weiterhin Reaktanden eingesetzt werden, die typischerweise in einem solchen Prozess verwendet werden, wie zum Beispiel, aber nicht ausschließlich, Elektrolyte, Mittel zur Einstellung des pH-Werts und/oder Kettenregler/-überträger.

In einer bevorzugten Ausführungsform der Erfindung wird die wässrige Polymerdispersion durch Polymerisation einer Monomerzusammensetzung bereitgestellt, die 5 Gew. % bis 100 Gew. % Basismonomere A, 0 Gew. % bis 50 Gew. % funktionelle Monomere B und 0 Gew. % bis 30 Gew. % Vernetzer-Monomere C, jeweils bezogen auf die Gesamtmasse der Monomerzusammensetzung, enthält.

Als Basismonomere A eignen sich insbesondere C₁- bis C₂₄-Alkylester der Acryl- und Methacrylsäure, sowie vinylaromatische Monomere wie Styrol, α-Methylstyrol oder Vinylpyridin. Diese Monomere können allein oder in beliebiger Mischung so eingesetzt werden, dass die Glasübergangstemperatur des resultierenden Polymers mindestens 60°C beträgt. Diese lässt sich mittels der dem Fachmann bekannten Fox-Gleichung (T.G. Fox, Bull. Am. Phys. Soc. 1, 123 (1956)) oder Pochan-Gleichung (J. M. Pochan, C. L. Beatty, D. F. Hinman, Macromolecules 11, 1156 (1977)) aus den Glasübergangstemperaturen der einzusetzenden Monomere abschätzen.

Als funktionelle Monomere B können insbesondere folgende Monomere mit einer reaktiven Gruppe allein oder in Mischungen eingesetzt werden: (Meth)acrylsäure, C₂- bis C₈-Hydroxyalkyl(meth)acrylate wie beispielsweise Hydroxyethylmethacrylat, C₂- bis C₈-(Alkyl)aminoalkyl(meth)acrylate wie beispielsweise Dimethylaminoethylmethacrylat, sulfonierte Monomere wie beispielsweise Natriumstyrolsulfonat, phosphatierte Monomere wie beispielsweise Monoacryloxyethylphosphat und/oder Vinylpyridine. Die Erfindung ist nicht auf die genannten funktionellen Monomere beschränkt. Jedes geeignete funktionelle Monomer aus dem Stand der Technik kann eingesetzt werden. Geeignete Monomere sind solche, bei denen die Glasübergangstemperatur des resultierenden Polymers mindestens 60°C beträgt.

Als Vernetzer-Monomere C werden vorzugsweise Monomere eingesetzt, die mindestens zwei ethylenisch ungesättigte nicht konjugierte Gruppen, N-Methylolgruppen und/oder Epoxygruppen umfassen. Geeignete Monomere umfassen Divinyl- und Polyvinylmonomere, wie zum Beispiel Divinylbenzol, Di- beziehungsweise Poly-(Meth)acrylsäureester, Di- beziehungsweise Polyallylether sowie Di- beziehungsweise Polyvinylether von Diolen beziehungsweise Polyolen. Weiterhin können Monomere eingesetzt werden, die nach dem Tränkungsprozess und Bildung der Beschichtung noch zu einer Vernetzung des Polymers führen können, ohne dass ein externer Vernetzer hinzugefügt werden muss, wie zum Beispiel N-Methylolacrylamid und/oder Glycidylmethacrylat.

Zusätzlich kann der bereitgestellten wässrigen Polymerdispersion ein externer Vernetzer zugesetzt werden, um die mechanischen Eigenschaften der beschichteten Faserprodukte und der Verbundeigenschaften der resultierenden Textil-Beton-Komposite zu verbessern. Dieser weist vorzugsweise eine passende Reaktivität zu den in der Polymerdispersion vorhandenen funktionellen Gruppen auf. Eingesetzt werden können zum Beispiel, aber nicht ausschließlich, geblockte und ungeblockte Polyisocyanate, Carbodiimide, Aziridine, Epoxidharze, Epoxysilane, Formaldehydharze, Harnstoffharze, reaktive Phenolharze, ohne auf die genannten beschränkt zu sein. Die Anwendung im Beschichtungssystem erfolgt derart, dass unmittelbar vor dem Inkontaktbringen des Faserprodukts und der wässrigen Polymerdispersion die Polymerdispersion sowie der externe Vernetzter gemischt werden.

Die erfindungsgemäß beschichteten Faserprodukte weisen eine exzellente Zugfestigkeit sowie Verbundfestigkeit im Beton auf und können so besonders vorteilhaft als Verstärkung /Bewehrung von Beton eingesetzt werden. So zeigen erfindungsgemäß beschichtete Carbonfasern ein vergleichbares Niveau der Zugfestigkeit sowie der Auszugskraft aus dem Beton wie ein dem Stand der Technik entsprechendes Epoxidharzsystem (vergleiche Tabelle 1, Eintrag 2 gegen Tabelle 3, Einträge 1-5). Somit ist eine Verwendung solcher Faserprodukte, nicht ausschließlich, aber besonders vorteilhaft für die Bewehrung von Beton- und/oder Zement-Erzeugnissen. Weiterhin können erfindungsgemäß beschichtete Faserprodukte zur Verstärkung bestehender Beton-Strukturen verwendet werden, welche im Außenbereich zur Anwendung kommen (beispielsweise Fassadenplatten oder andere Außenkonstruktionen) und Temperaturen beziehungsweise Witterungsbedingungen bis zu 100°C ausgesetzt sind.

Eine erfindungsgemäße Beschichtung basierend auf der wässrigen Polymerdispersion ist ebenfalls hochinteressant für die Verwendung auf hydrolyseempfindlichen Fasermaterialien wie Glas- oder Basaltfasern. Durch die in Tabelle 3, Einträge 6 und 7, gezeigten Messwerte wird deutlich, dass gute Zugfestigkeiten der beschichteten Rovings bei Raumtemperatur und bei 100 °C erreicht werden. Diese liegen deutlich über den Werten, die durch Beschichtung mit nicht erfindungsgemäßen Polymerdispersionen erreicht werden (Tabelle 2, Einträge 6 und 7). Die in den Beispielen verwendete Glasfaser besteht laut Hersteller Klasse II des sogenannten SiC-Tests ("Strength in Concrete", EN 14649). Bei diesen Tests werden Glasfasern einbetoniert und für 96 h bei 80 °C und 80 % relativer Luftfeuchte gelagert. In der anschließenden Prüfung muss bei einer Ausgangsfestigkeit von 1000 MPa die Rest-Festigkeit zur Erteilung der Klasse II mindestens 350 MPa betragen, der Abfall also maximal 65 %. Beschichtet man diese Glasfasern erfindungsgemäß (siehe Tabelle 3, Eintrag 6), erreicht man eine signifikante Erhöhung der Alkalistabilität, da der Festigkeitsabfall nur noch 35 % beträgt. Bei erfindungsgemäß beschichteten Basaltfasern (Tabelle 3, Eintrag 7) beträgt der Abfall 60 %.

Dies zeigt, dass eine erfindungsgemäß bereitgestellte wässrige Polymerdispersion überraschenderweise gute Alkaliresistenz aufweist und daher hervorragend geeignet ist zur Verwendung als Beschichtung von Textil-Bewehrungen für zementgebundene Matrices. In Tabelle 3 sind die Werte für Auszugsfestigkeiten von erfindungsgemäß beschichteten Carbonfasern in Beton aufgeführt (Einträge 1-5) bei Raumtemperatur und 80 °C. In beiden Fällen werden exzellente Werte erreicht, die auf dem Niveau von Epoxid-beschichteten Fasern laut Stand der Technik liegen. In Tabelle 3 sind ebenfalls die betreffenden Werte für alkaliresistente Glasfasern (AR-Glas) aufgeführt (Eintrag 6). Diese Werte liegen deutlich höher als zum Beispiel die im Patent EP 2 004 712 B1 angegebenen Werte. Erfindungsgemäß beschichtete Faserprodukte aus Carbonfasern erwiesen sich auch als wickelbar um eine Kaule mit einem Durchmesser von 20 cm entlang der Maschinenlaufrichtung über ein 12k-Roving.

In einer weiteren Ausführungsform wird die der Erfindung zugrundeliegende Aufgabenstellung gelöst durch die Verwendung der erfindungsgemäß beschichteten Faserprodukte, insbesondere in Form von linienförmigen textilen Gebilden, zweidimensionalen textilen Flächengebilden und/oder dreidimensionalen textilen Raumgebilden, zur Verstärkung mineralischer Werkstoffe, insbesondere zur Verstärkung von Betonbauteilen. Die erfindungsgemäße Verwendung ermöglicht die Bereitstellung der erfindungsgemäßen Verbundwerkstoffe mit den zuvor beschriebenen technischen Vorteilen.

### Ausführungsbeispiele

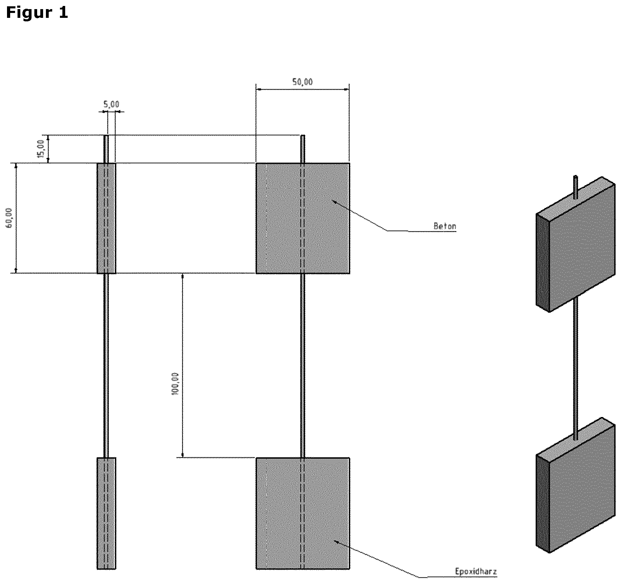

Mithilfe des beschriebenen Verfahrens wurden beschichtete Faserprodukte und daraus resultierende erfindungsgemäße Textil-Beton-Verbundwerkstoffe hergestellt. Hierfür wurden zuerst die Polymerdispersionen durch Tränkung auf Carbonfasern vom Typ 3200tex von TohoTenax aufgebracht und anschließend bei 160°C getrocknet. Aus den erhaltenen Faserprodukten wurden Prüfkörper zur Bestimmung der Zugfestigkeit bei Raumtemperatur (RT), bei 100°C und nach Alkalilagerung hergestellt (siehe Charakterisierungsmethoden/Zugprüfung). Weiterhin wurden Textil-Beton-Verbundwerkstoffe durch Einbettung der erfindungsgemäß beschichteten Faserprodukte in Feinbeton hergestellt (Prüfkörper siehe Figur 1) und einer Auszugsprüfung unterzogen (siehe Charakterisierungsmethoden/Auszugsprüfung).

In gleicher Weise wurden Beispiele mit Glas- und Basaltfasern, sowie Vergleichsbeispiele mit nicht erfindungsgemäßen Polymerdispersionen und Polymeren aus dem Stand der Technik durchgeführt.

Es wurden folgende Messungen durchgeführt: Zugprüfungen der beschichteten Rovings bei Raumtemperatur RT, bei 100°C und nach Lagerung im alkalischen Medium (ETAG004), Auszugsprüfungen der Textil-Beton-Verbünde bei Raumtemperatur RT und bei 80°C). In Tabelle 1 sind die Ergebnisse dieser Prüfungen für Beispiele zum Stand der Technik aufgeführt. In Tabelle 2 sind die erhaltenen Prüfwerte für nicht erfindungsgemäß hergestellte Probekörper dargestellt. In Tabelle 3 sind die entsprechenden Prüfwerte für erfindungsgemäß hergestellte Prüfkörper zusammen gefasst.

Im Folgenden werden die verwendeten Materialien sowie die Durchführung der Zugprüfungs- und Auszugsprüfungsversuche genauer beschrieben.

### Verwendete Materialien

### Rovings/Garne:

- Kohlefaser vom Typ 3200tex von TohoTenax
- Basaltfaser vom Typ 2400tex von Deutsche Basalt Faser GmbH
- Alkaliresistente Glasfaser vom Typ 2400tex von Owens Corning

### Feinbeton:

In einem Planetenrührer werden 115 g Wasser und 1 kg Pagel TF 10 Feinbeton aus Portlandzement vorgelegt und für 5 min gemischt (gemäß Technischem Datenblatt des verwendeten Betons).

### Polymerdispersionen:

Als Polymerdispersionen können handelsübliche Produkte eingesetzt werden. In den aufgeführten Beispielen wurden Modellpolymere nach einem klassischen semikontinuierlichen Emulsionspolymerisationsverfahren hergestellt. -Die Polymerdispersionen weisen alle einen Feststoffgehalt von 47 Gew. % auf. Um Polymere mit einer erfindungsgemäß hohen Glasübergangstemperatur von 60°C und mehr herzustellen, wurden Monomerzusammensetzungen mit einem hohen Anteil an Monomeren gewählt, die harte Polymere ergeben, beispielsweise Styrol. Nicht erfindungsgemäße Polymere enthielten dementsprechend höhere Anteile an weichen Comonomeren, beispielsweise Ethylhexylacrylat. Die genaue Zusammensetzung für eine bestimmte Glasübergangstemperatur wurde mit Hilfe der Fox-Gleichung abgeschätzt und nach der Synthese durch DSC-Messungen bestätigt. Die Auftragsmenge auf die verwendeten Fasern lag für alle verwendeten wässrigen Binderdispersionen bei ca. 30 Gew. %.

Die Komponenten des Epoxidharzsystems basierten auf handelsüblichem cycloaliphatischen Epoxid mit cycloaliphatischem Amin als Härter. Das System war lösungsmittel- und wasserfrei. Die Auftragsmenge lag bei ca. 50 Gew. % Feststoff auf der Faser nach Trocknung.

### Vernetzer:

Vernetzer 1: Blockiertes Polyisocyanat der Firma Covestro
Vernetzer 2: Reaktives Polyisocyanat der Firma Covestro

### Charakterisierungsmethoden

### Beschichtung des Garns

Als auszurüstendes Garn können Garne aus Kohle-, Glas- oder Basaltfasern verwendet werden. Die Garne werden in einem Handprozess beschichtet beziehungsweise getränkt. Während der Beschichtung werden zwischen 10 und 60 Gew.-% Polymer auf die Faser aufgetragen. Das so beschichtete Garn wird anschließend getrocknet bei 160 °C.

### Zugprüfung

DIN EN ISO 527-4 und DIN EN ISO 527-5 sind die in Europa relevanten Standards für faserverstärkte Werkstoffe (FVW). Die beiden Normen beschreiben nur die Zugprüfung der FVWs. Hierbei wird das Spannungs-Dehnungs-Verhalten in den Grenzzuständen 0°- und 90° Orientierung der Faserverstärkung um Kennwerte wie Querkontraktionszahl v, Zugfestigkeit σM, Bruchdehnung εM und E-Modul bestimmen zu können.

Der Zugversuch hat in der Kunststoffprüfung eine vorrangige Stellung und gilt unter den quasistatischen beziehungsweise statischen Prüfmethoden als Grundversuch. Es wird eine Traverse mit konstanter Geschwindigkeit laut Norm DIN EN ISO 527-4 verfahren. Die FVW zeigen in der Regel ein hart sprödes Verhalten. Daher sind Zugfestigkeit σM und Streckspannung σY gleich. Die Bruchspannung σB kann auf den gleichen Punkt fallen. Der Prüfkörpertyp 1B aus DIN EN ISO 527-4 wird hauptsächlich für faserverstärkte Thermoplaste und Duroplaste verwendet. An diesem orientiert sich der verwendete Prüfkörper.

Die Materialien werden unter drei Bedingungen geprüft: bei Raumtemperatur, bei 100 °C und nach Lagerung im alkalischen Medium. Für die letztere Untersuchung werden die Proben für 14 Tage bei 45 °C in einer Lösung mit pH 13,7 gelagert und bei 45 °C ohne vorherige Trocknung geprüft. Die Prüflösung orientiert sich an der Lösung in ETAG004 beschriebenen Zusammensetzung.

### Auszugsprüfung

In der allgemeinen bauaufsichtlichen Zulassung des Deutschen Instituts für Bautechnik in der Bundesrepublik Deutschland (abZ) Nr. Z-31.10-182 wird die Prüfung der Verbundfestigkeit des Textils zum Feinbeton beschrieben. Hierbei wird ein textilbewehrter Probekörper belastet. Die Einleitung der Kraft erfolgt über die Klemmung an Ober- und Unterseite des Probekörpers. Die textile Bewehrung ist in Belastungsrichtung im Probekörper ausgerichtet (0° zur Belastungsrichtung). Zur Auswertung wird die maximale Maschinenkraft Fₘₐₓ herangezogen. Zur Charakterisierung der Faserstrangproben wird eine Methode verwendet die an die obige angelehnt ist. Diese ist ebenfalls an anderer Stelle beschrieben (State-of-the-Art report of RILEM Technical Committee TC 201-TRC; EP 2 004 712 B1) zur Charakterisierung der Verbundfestigkeit zwischen Garn und Textil. Die beschichteten Garne wurden in Beton mit der Abmessung Breite x Dicke = 5 cm x 6 cm mit einer Betondicke von 1 cm mittig eingebettet, wie in Figur 1 dargestellt ist. Hier wurde die Betondeckung von 0,5 cm analog zur abZ Nr. Z-31.10-182 verwendet. Die beschichteten Garne wurden dabei mit 1,5 cm über den Beton in Auszugsrichtung überstehend präpariert, um immer die gleiche Verbundfläche zum Beton während der Prüfung zu gewährleisten. Die Prüfbedingungen wurden analog zu abZ Nr. Z-31.10-182 gewählt. Die Prüfgeschwindigkeit beträgt dabei 1 mm/min bis 3 mm Auszugslänge und ab 3 mm Auszugslänge 5 mm/min bis zum vollständigen Auszug. Die Prüfkörper werden bei Raumtemperatur und bei 80 °C vermessen. Ausgewertet wird die maximale Auszugskraft Fₘₐₓ.

**Tabelle 1 - Referenzen zum Stand der Technik**

| | Fasertyp | Chem. Struktur¹ | T_{g} [°C] | Funktionalität Polymer | Interner Vernetzer | Externer Vernetzer | Zugfestigkeit RT [MPa] | Zugfestigkeit 100°C [MPa] | Zugfestigkeit ETAG004 [MPa]⁴ | Auszugsfestigkeit Fₘₐₓ RT [N] | Auszugsfestigkeit Fₘₐₓ 80° C [N] |
|---|---|---|---|---|---|---|---|---|---|---|---|
| 1² | Carbon | SBR | -10 | Carboxyl | - | Melaminharz | 2500 | 2400 | 2400^{4*} | 660 | 180 |
| 2³ | Carbon | EP | 100 | - | - | - | 3500 | 2700 | 3300 | >1500⁵ | >1500⁵ |

| | | | | | | | | | | | |
|---|---|---|---|---|---|---|---|---|---|---|---|
| ¹ SBR = Styrol-Butadien-Kautschuk, EP = Epoxidharz ² wässrige SBR-Dispersion Lefasol VL 90/1 (Lefatex) ³ cycloaliphatisches Epoxid mit cycloaliphatischem Amin gehärtet, T_{g} =100°C ⁴ Zugfestigkeit bei 45°C nach Lagerung in Betonporenlösung pH 13,7 14 Tage ohne Trocknung ^{4*} Zugfestigkeit bei RT eines beschichteten Rovings nach Lagerung in Betonporenlösung (pH 12,8) über 7 Tage und Trocknung ⁵ Beton während der Prüfung aufgrund der zu hohen Verbundfestigkeiten entlang der Belastung gerissen | | | | | | | | | | | |

**Tabelle 2 - Nicht erfindungsgemäße Beispiele**

| | Fasertyp | Chem. Struktur¹ | T_{g} [°C] | Funktionalität Polymer | Interner Vernetzer | Externer Vernetzer | Zugfestigkeit RT [MPa] | Zugfestigkeit 100°C [MPa] | Zugfestigkeit ETAG004 [MPa]³ | Auszugsfestigkeit Fₘₐₓ RT [N] | Auszugsfestigkeit Fₘₐₓ 80° C [N] |
|---|---|---|---|---|---|---|---|---|---|---|---|
| 1 | Carbon | ACR | 10 | - | - | - | 2900 | 2200 | 2800 | 520 | 78 |
| 2 | Carbon | ACR | 40 | - | - | - | 3700 | 2400 | 2900 | 580 | 170 |
| 3 | Carbon | ACR | 5 | Hydroxy | - | - | 3100 | 2400 | 2800 | 800 | 410 |
| 4 | Carbon | ACR | 5 | Hydroxy | - | Vernetzer 1 | 2900 | 2500 | 3100 | 680 | 340 |
| 5 | Carbon | ACR | 8 | - | PETA² | - | 2600 | 2000 | 2200 | 700 | 280 |
| 6 | AR-Glas | ACR | 5 | Hydroxy | - | Vernetzer 1 | 950 | 560 | 580 | 660 | 360 |
| 7 | Basalt | ACR | 5 | Hydroxy | - | Vernetzer 1 | 990 | 930 | 360 | 220 | 96 |

| | | | | | | | | | | | |
|---|---|---|---|---|---|---|---|---|---|---|---|
| ¹ ACR = Reinacrylat, SAC = Styrolacrylat ² PETA = Pentaerythritoltriacrylat ³ Zugfestigkeit bei 45°C nach Lagerung in Betonporenlösung pH 13,7 14 Tage ohne Trocknung | | | | | | | | | | | |

**Tabelle 3 - Erfindungsgemäße Beispiele**

| | Fasertyp | Chem. Struktur¹ | T_{g} [°C] | Funktionalität Polymer | Interner Vernetzer | Externer Vernetzer | Zugfestigkeit RT [MPa] | Zugfestigkeit 100°C [MPa] | Zugfestigkeit ETAG004 [MPa]³ | Auszugsfestigkeit Fₘₐₓ RT [N] | Auszugsfestigkeit Fₘₐₓ 80° C [N] |
|---|---|---|---|---|---|---|---|---|---|---|---|
| 1 | Carbon | ACR | 70 | - | - | - | 3900 | 2700 | 3200 | 940 | 930 |
| 2 | Carbon | SAC | 115 | - | - | - | 3300 | 2800 | 2900 | 1000 | 1000 |
| 3 | Carbon | SAC | 105 | Hydroxy | - | - | 3500 | 3000 | 3400 | >1500⁴ | >1500⁴ |
| 4 | Carbon | SAC | 105 | Hydroxy | - | Vernetzer 2 | 3900 | 3000 | 3600 | >1500⁴ | >1500⁴ |
| 5 | Carbon | ACR | 105 | - | PETA² | - | 3200 | 2900 | 3100 | >1500⁴ | >1500⁴ |
| 6 | AR-Glas | SAC | 105 | Hydroxy | - | Vernetzer 2 | 910 | 790 | 590 | 910 | 760 |
| 7 | Basalt | SAC | 105 | Hydroxy | - | Vernetzer 2 | 1100 | 1100 | 430 | 1000 | 1000 |

| | | | | | | | | | | | |
|---|---|---|---|---|---|---|---|---|---|---|---|
| ¹ ACR = Reinacrylat, SAC = Styrolacrylat ² PETA = Pentaerythritoltriacrylat ³ Zugfestigkeit bei 45°C nach Lagerung in Betonporenlösung pH 13,7 14 Tage ohne Trocknung ⁴ Beton während der Prüfung aufgrund der zu hohen Verbundfestigkeiten entlang der Belastung gerissen | | | | | | | | | | | |

## Patentansprüche

1. Verbundwerkstoff aus einem textilen Faserprodukt mit einer Beschichtung umfassend zwischen 5 Gew.-% und 100 Gew.-% eines aufgebrachten Materials, bezogen auf die Rohmasse des Faserprodukts, wobei das Material
20 bis 100 Gew.-% Polymere basierend auf ethylenisch polymerisierbaren Monomeren mit einer Glasübergangstemperatur von mindestens 60°C,
0 bis 80 Gew.-% Vernetzerbausteine sowie
0 bis 20 Gew.-% sonstige Additive
umfasst,
in einer mineralischen Matrix.

2. Verbundwerkstoff nach Anspruch 1, wobei das textile Faserprodukt ein textiles Faserprodukt mit einer Beschichtung umfassend 10 bis 60 Gew. % des aufgebrachten Materials ist.

3. Verbundwerkstoff nach Anspruch 1 oder 2, **dadurch gekennzeichnet, dass** die polymerisierbaren Monomere vinylisch polymerisierbar sind.

4. Verbundwerkstoff nach einem der Ansprüche 1 bis 3, **dadurch gekennzeichnet, dass** die Polymere aus einer Monomerzusammensetzung erhältlich sind, wobei die Monomerzusammensetzung 5% bis 100% Basismonomere A, 0% bis 50% funktionelle Monomere B und 0% bis 30% Vernetzer-Monomere C, jeweils bezogen auf die Gesamtmasse der Monomerzusammensetzung, enthält, wobei insbesondere die Basismonomere A ausgewählt sind aus der Gruppe der vinylaromatischen Monomere und der C₁- bis C₂₄-Alkyl(meth)acrylate, insbesonderedie funktionellen Monomere B ausgewählt sind aus der Gruppe der (Meth)acrylsäure, C₂- bis C₈-Hydroxyalkyl(meth)acrylate, C₂- bis C₈-(Alkyl)-aminoalkyl(meth)acrylate, sulfonierten Monomere, phosphatierte Monomere und Vinylpyridine und insbesondere die Vernetzer-Monomere C mindestens zwei ethylenisch ungesättigte nicht konjugierte Gruppen, N-Methylolgruppen und/oder Epoxygruppen umfassen und.

5. Verbundwerkstoff nach einem oder mehreren der Ansprüche 1 bis 4, **dadurch gekennzeichnet, dass** die Vernetzer Monomere C und/oder externe Vernetzer mit einer Reaktivität gegenüber den funktionellen Monomeren B aufweist und insbesondere ausgewählt ist aus der Gruppe der di-, tri- und/oder polyfunktionellen ungeblockten oder geblockten Isocyanaten, Epoxysilanen, Formaldehydharzen, Melaminharzen, Carbodiimiden und Epoxidharzen.

6. Verbundwerkstoff nach einem der Ansprüche 1 bis 5, **dadurch gekennzeichnet, dass** das textile Faserprodukt linienförmige textile Gebilde, zweidimensionale textile Flächengebilde und/oder dreidimensionale textile Raumgebilde umfasst.

7. Verbundwerkstoff nach einem der Ansprüche 1 bis 6, **dadurch gekennzeichnet, dass** das textile Faserprodukt Carbonfasern, Glasfasern, Basaltfasern, Aramidfasern, Polyethylenfasern und/oder Polypropylenfasern einschließlich deren Gemische umfasst oder aus den genannten Fasern besteht.

8. Verbundwerkstoff nach einem der Ansprüche 1 bis 7, **dadurch gekennzeichnet, dass** das textile Faserprodukt erhältlich ist mit einem Verfahren zur Herstellung eines textilen Faserprodukts, wobei man
i) eine wässrige Polymerdispersion bereitstellt, die ein Polymer basierend auf ethylenisch ungesättigten polymerisierbaren Monomeren mit einer Glasübergangstemperatur von mindestens 60°C sowie gegebenenfalls ein geeignetes Material zur Vernetzung des Polymers und/oder weitere Additive enthält,
ii) ein Faserprodukt mit der wässrigen Polymerdispersion in Kontakt bringt und
iii) das so beschichtete Faserprodukt trocknet, insbesondere bei Raumtemperatur oder einer erhöhten Temperatur von bis zu 220°C.

9. Verbundwerkstoff nach Anspruch 8, wobei das Verfahren umfasst, dass man das Faserprodukt mit der wässrigen Polymerdispersion in Kontakt bringt, indem man ein kontinuierliches oder diskontinuierliches textiles Applikationsverfahren, insbesondere Tränken, Sprühen, Tauchen, Gießen und/oder Spritzen, anwendet.

10. Verbundwerkstoff nach Anspruch 8 oder 9, wobei das Verfahren umfasst, dass man eine wässrige Polymerdispersion mit einem Feststoffgehalt in einem Bereich von 10% bis 70%, insbesondere in einem Bereich von 25% bis 60%, bezogen auf die Gesamtmasse der Polymerdispersion, einsetzt.

11. Verbundwerkstoff nach einem der Ansprüche 8 bis 10, wobei das Verfahren umfasst dass die wässrige Polymerdispersion mittels eines kontinuierlichen, semikontinuierlichen oder diskontinuierlichen Polymerisationsverfahren, insbesondere mittels Emulsionspolymerisation, Suspensionspolymerisation oder Dispersionspolymerisation, erhalten wird.

12. Verbundwerkstoff nach einem der Ansprüche 1 bis 11, wobei es sich bei der mineralischen Matrix um eine Betonmatrix handelt.

13. Verwendung eines Faserprodukts zur Verstärkung mineralischer Werkstoffe, wobei das Faserprodukt ein textiles Faserprodukt mit einer Beschichtung umfassend zwischen 5 Gew.-% und 100 Gew.-% eines aufgebrachten Materials, bezogen auf die Rohmasse des Faserprodukts, ist, wobei das Material
20 bis 100 Gew.-% Polymere basierend auf ethylenisch polymerisierbaren Monomeren mit einer Glasübergangstemperatur von mindestens 60°C,
0 bis 80 Gew.-% Vernetzerbausteine sowie
0 bis 20 Gew.-% sonstige Additive
umfasst.

14. Verwendung nach Anspruch 13, wobei es sich bei den mineralischen Werkstoffen um Betonbauteile handelt.

## Claims

1. A composite material made of a textile fibrous product having a coating comprising from 5% by weight to 100% by weight of applied material, based on the raw composition of the fibrous product, wherein the material comprises
from 20 to 100% by weight of polymers based on ethylenically polymerizable monomers having a glass transition temperature of at least 60 °C,
from 0 to 80% by weight of cross-linking components; and
from 0 to 20% by weight of other additives;
in a mineral matrix.

2. The composite material according to claim 1, wherein said textile fibrous product is a textile fibrous product with a coating comprising from 10 to 60% by weight of the applied material.

3. The composite material according to claim 1 or 2, **characterized in that** said polymerizable monomers are vinylically polymerizable.

4. The composite material according to any of claims 1 to 3, **characterized in that** said polymers are obtainable from a monomer composition, wherein said monomer composition contains from 5% to 100% of basis monomers A, from 0% to 50% of functional monomers B, and from 0% to 30% of cross-linking monomers C, respectively based on the total mass of the monomer composition, wherein especially the basis monomers A are selected from the group of vinyl-aromatic monomers and C₁ to C₂₄ alkyl (meth)acrylates, especially the functional monomers B are selected from the group of (meth)acrylic acid, C₂ to C₈ hydroxyalkyl (meth)acrylates, C₂ to C₈ (alkyl)aminoalkyl (meth)acrylates, sulfonated monomers, phosphated monomers and vinylpyridines, especially the cross-linking monomers C comprise at least two ethylenically unsaturated non-conjugated groups, N-methylol groups, and/or epoxy groups.

5. The composite material according to one or more of claims 1 to 4, **characterized in that** the cross-linking components comprise monomers C and/or external cross-linkers having reactivity towards the functional monomers B, especially those selected from the group of di-, tri- and/or polyfunctional unblocked or blocked isocyanates, epoxysilanes, formaldehyde resins, melamine resins, carbodiimides, and epoxy resins.

6. The composite material according to any of claims 1 to 5, **characterized in that** said textile fibrous product comprises one-dimensional textile structures, two-dimensional textile sheets, and/or three-dimensional textile steric structures.

7. The composite material according to any of claims 1 to 6, **characterized in that** said textile fibrous product comprises, or consists of, carbon fibers, glass fibers, basalt fibers, aramid fibers, polyethylene fibers, and/or polypropylene fibers, including mixtures thereof.

8. The composite material according to any of claims 1 to 7, **characterized in that** said textile fibrous product is obtainable by a process for producing a textile fibrous product, comprising
i) providing an aqueous polymer dispersion that contains a polymer based on ethylenically unsaturated polymerizable monomers having a glass transition temperature of at least 60 °C, and optionally a suitable material for cross-linking the polymer, and/or other additives;
ii) contacting a fibrous product with said aqueous polymer dispersion; and
iii) drying the thus coated fibrous product, especially at room temperature or an elevated temperature of up to 220 °C.

9. The composite material according to claim 8, wherein said process comprises the contacting of the fibrous product with the aqueous polymer dispersion by applying a continuous or discontinuous textile application method, especially soaking, mist-spraying, dipping, casting and/or jet-spraying.

10. The composite material according to claim 8 or 9, wherein said process comprises the employing of an aqueous polymer dispersion with a solids content within a range of from 10% to 70%, especially within a range of from 25% to 60%, based on the total mass of the polymer dispersion.

11. The composite material according to any of claims 8 to 10, wherein said process comprises the obtaining of said aqueous polymer dispersion by a continuous, semi-continuous or discontinuous polymerization method, especially by emulsion polymerization, suspension polymerization, or dispersion polymerization.

12. A composite material according to any of claims 1 to 11, wherein said mineral matrix is a concrete matrix.

13. Use of a fibrous product for reinforcing mineral materials, wherein said fibrous product is a textile fibrous product having a coating comprising from 5% by weight to 100% by weight of applied material, based on the raw composition of the fibrous product, wherein the material comprises
from 20 to 100% by weight of polymers based on ethylenically polymerizable monomers having a glass transition temperature of at least 60 °C,
from 0 to 80% by weight of cross-linking components; and
from 0 to 20% by weight of other additives.

14. The use according to claim 13, wherein said mineral materials are concrete components.

## Revendications

1. Composite consistant en un produit fibreux textile avec un revêtement comprenant entre 5 % en poids à 100 % en poids d'un matériau appliqué, par rapport au mélange brut dudit produit fibreux, dans lequel le matériau comprend
20 à 100 % en poids de polymères basés sur des monomères éthyléniquement polymérisables avec une température de transition vitreuse d'au moins 60 °C,
0 à 80 % en poids de composants réticulants, et
0 à 20 % en poids d'autres additifs,
dans une matrice minérale.

2. Composite selon la revendication 1, dans lequel ledit produit fibreux textile est un produit fibreux textile avec un revêtement comprenant 10 à 60 % en poids dudit matériau appliqué.

3. Composite selon la revendication 1 ou 2, **caractérisé en ce que** lesdits monomères polymérisables sont polymérisables par polymérisation vinylique.

4. Composite selon l'une quelconque des revendications 1 à 3, **caractérisé en ce que** lesdits polymères peuvent être obtenus à partir d'une composition de monomères, ladite composition de monomères contenant 5 % à 100 % de monomères de base A, 0 % à 50 % de monomères fonctionnels B, et 0 % à 30 % de monomères réticulants C, respectivement par rapport à la masse totale de la composition de monomères, dans lequel les monomères de base A sont notamment choisis dans le groupe des monomères vinyle-aromatiques et (méth)acrylates d'alkyle en C₁ à C₂₄, les monomères fonctionnels B sont notamment choisis dans le groupe consistant en l'acide (méth)acrylique, les (méth)acrylates d'hydroxyalkyle en C₂ à C₈, (méth)acrylates d'(alkyl)aminoalkyle en C₂ à C₈, monomères sulfonés, monomères phosphatés, et vinylpyridines, et les monomères réticulants C notamment comprennent au moins deux groupes non conjugués éthyléniquement insaturés, groupes N-méthylol, et/ou groupes époxy.

5. Composite selon l'une ou plusieurs des revendications 1 à 4, **caractérisé en ce que** les composants réticulants comprennent des monomères C et/ou des agents réticulants externes ayant une réactivité vis-à-vis des monomères fonctionnels B, notamment ceux choisis dans le groupe des isocyanates, époxysilanes, résines de formaldéhyde, résines de mélamine, carbodiimides, et résines d'époxy, di-, tri- et/ou polyfonctionnels, non bloqués ou bloqués.

6. Composite selon l'une quelconque des revendications 1 à 5, **caractérisé en ce que** ledit produit fibreux textile comprend des structures textiles unidimensionnelles, des feuilles textiles bidimensionnelles, et/ou des structures stériques textiles tridimensionnelles.

7. Composite selon l'une quelconque des revendications 1 à 6, **caractérisé en ce que** ledit produit fibreux textile comprend, ou consiste en, des fibres de carbone, des fibres vitreuses, des fibres de basalte, des fibres d'aramide, des fibres de polyéthylène, et/ou des fibres de polypropylène, incluant des mélanges de ceux-ci.

8. Composite selon l'une quelconque des revendications 1 à 7, **caractérisé en ce que** ledit produit fibreux textile peut être obtenu par un procédé pour produire un produit fibreux textile, comprenant les étapes consistant à
i) procurer une dispersion de polymère aqueuse contenant un polymère à base de monomères polymérisables éthyléniquement insaturés avec une température de transition vitreuse d'au moins 60 °C, et éventuellement un matériau convenant pour la réticulation du polymère, et/ou d'autres additifs,
ii) mettre en contact un produit fibreux avec la dispersion de polymère aqueuse, et
iii) sécher le produit fibreux ainsi revêtu, notamment à la température ambiante ou à une température élevée jusqu'à 220 °C.

9. Composite selon la revendication 8, ledit procédé comprenant la mise en contact dudit produit fibreux avec la dispersion de polymère aqueuse en appliquant un procédé d'application textile continu ou discontinu, notamment par abreuvement, pulvérisation, trempage, coulée, et/ou projection.

10. Composite selon la revendication 8 or 9, ledit procédé comprenant l'étape consistant à utiliser une dispersion de polymère aqueuse ayant une teneur en matière solide comprise entre 10 % et 70 %, notamment comprise entre 25 % et 60 %, par rapport à la masse totale de la dispersion de polymère.

11. Composite selon l'une quelconque des revendications 8 à 10, ledit procédé comprenant l'étape consistant à obtenir ladite dispersion de polymère aqueuse en utilisant un procédé de polymérisation continu, semi-continu ou discontinu, notamment au moyen d'une polymérisation en émulsion, polymérisation en suspension, ou polymérisation en dispersion.

12. Composite selon l'une quelconque des revendications 1 à 11, dans lequel ladite matrice minérale est une matrice de béton.

13. Utilisation d'un produit fibreux pour renforcer des matériaux minéraux, dans laquelle ledit produit fibreux est un produit fibreux textile avec un revêtement comprenant entre 5 % en poids à 100 % en poids d'un matériau appliqué, par rapport au mélange brut dudit produit fibreux, dans lequel le matériau comprend
20 à 100 % en poids de polymères basés sur des monomères éthyléniquement polymérisables avec une température de transition vitreuse d'au moins 60 °C,
0 à 80 % en poids de composants réticulants, et
0 à 20 % en poids d'autres additifs.

14. Utilisation selon la revendication 13, dans laquelle lesdits matériaux minéraux sont des composants de béton.
